# EUROPÄISCHE PATENTSCHRIFT

(11) **EP 0 725 211 B1**
(45) Veröffentlichungstag und Bekanntmachung des Hinweises auf die Patenterteilung: **27.01.1999**
(21) Anmeldenummer: 95119914.0
(22) Anmeldetag: 16.12.1995
(51) Int. Cl.: F02D 41/12, F01N 3/20

(54) **Vorrichtung zur Abschaltsteuerung eines Einspritzventils bei Brennkraftmaschinen**
Apparatus for cut-off control of an injection valve in combustion engines
Dispositif pour la commande de coupure de soupape à injection dans les moteurs à combustion

(30) Priorität: 02.02.1995 DE 19503317
(43) Veröffentlichungstag der Anmeldung: 07.08.1996
(73) Patentinhaber: Bayerische Motoren Werke Aktiengesellschaft, 80788 München (DE)
(72) Erfinder: Bauer, Alois, D-86609 Donauwörth (DE)

(56) Entgegenhaltungen:
- US-A- 4 134 261
- US-A- 4 391 095
- US-A- 4 467 602
- PATENT ABSTRACTS OF JAPAN vol. 9, no. 152 (M-391), 27.Juni 1985 & JP-A-60 027756 (TOYOTA JIDOSHA KK), 12.Februar 1985,

## Beschreibung

Die Erfindung bezieht sich auf eine Vorrichtung zur Abschaltsteuerung eines Einspritzventils bei Brennkraftmaschinen in Kraftfahrzeugen nach dem Oberbegriff des Patentanspruchs 1.

Eine derartige Vorrichtung ist beispielsweise aus der US-A-4,467,602 bekannt. Nach dieser bekannten Vorrichtung wird bei einer Abschaltung von drei Zylindern und bei geringer Temperatur des Katalysators in der gemeinsamen Abgasleitung die Einspritzmenge der verbleibenden Zylinder erhöht, was zu einer exothermen Oxidation von CO und HC im Katalysator führt. Dabei wird also während einer teilweise eingeschalteten Abschaltsteuerung eine zusätzliche Einspritzmenge in die nicht-abgeschalteten Zylinder eingespritzt.

Weiterhin ist aus der US-A-4,134,261 eine Vorrichtung zur Abschaltsteuerung eines Einspritzventils bei Brennkraftmaschinen bekannt, die u.a. die Unterdrückung bzw. Aufhebung der Zylinderabschaltung durch (erneute) Einspritzung in grundsätzlich abgeschaltete Zylinder umfaßt, falls die Katalysatortemperatur zu gering (geworden) ist.

Eine Vorrichtung zur Abschaltsteuerung eines Einspritzventils bei Brennkraftmaschinen ist auch aus der noch nicht veröffentlichten DE 43 34 557 bekannt und wird vorzugsweise bei Kraftstoffverbrauch-einsparenden Betriebszuständen der Brennkraftmaschine, wie z. B. im Leerlaufbetrieb, verwendet. Bei der aus der DE 43 34 557 bekannten Vorrichtung umfaßt die Abschaltsteuerung eines Einspritzventils beispielsweise ein wechselweises Abschalten der Einspritzventile einer der beiden Zylinderreihen einer zweireihigen Brennkraftmaschine oder ein sequentielles Abschalten einzelner Einspritzventile nach einer vorgegebenen Reihenfolge bei Brennkraftmaschinen mit nur einer Zylinderreihe. In beiden Fällen wird die Abschaltung eines bzw. mehrerer Einspritzventile zumindest für eine vorgegebene Zeitspanne aufgehoben, wenn die Temperatur des Abgaskatalysators eine vorgegebene Grenztemperatur unterschreitet. Bei dieser bekannten Vorrichtung bedeutet ein Aufheben der Einspritzventilabschaltung, auch Zylinderabschaltung genannt, eine Rückkehr in den Normalbetrieb der Brennkraftmaschine einschließlich einer Einspritzung des Kraftstoffes und einer Befeuerung der Zylinder. Hierdurch wird eine Verbesserung des ther mischen Verhaltens des Abgskatalysators bei nicht ausreichend geheiztem Abgaskatalysator auf Kosten des Kraftstoffverbrauchs erreicht.

Es ist Aufgabe der Erfindung, eine Vorrichtung eingangs genannter Art derart zu verbessern, daß auch bei nicht ausreichend aufgeheiztem Abgaskatalysator eine Kraftstoffverbrauchsminimierung durchgeführt wird.

Diese Aufgabe wird durch die kennzeichnenden Merkmale des Patentanspruchs 1 erreicht.
Erfindungsgemäß sind Mittel zur Vorgabe einer zur Erhöhung der momentanen Abgaskatalysatortemperatur notwendigen Einspritzmenge vorhanden. Liegt die Abgaskatalysatortemperatur unterhalb einer vorgegebenen Schwelle, wird diese vorgegebene Einspritzmenge während einer eingeschalteten Abschaltsteuerung der Einspritzventile zumindest zeitweise eingespritzt. Vorzugsweise wird, evtl. auch zylinderselektiv, die Zündung abgeschaltet, wenn durch die vorgegebene Einspritzmenge ein zündwilliges Gemisch entsteht, da insbesondere ein unverbranntes Gemisch zu einer schnellen Aufheizung des Abgaskatalysators führt.

Im Unterschied zu der bekannten Vorrichtung wird die Abschaltsteuerung bei Unterschreiten einer vorgegebenen Abgaskatalysatortemperatur-Schwelle nicht aufgehoben im Sinne einer Rückkehr in den Normalbetrieb der Brennkraftmaschine, sondern lediglich erweitert im Sinne einer relativen Abschaltsteuerung. Diese relative Abschaltsteuerung ist derart zu verstehen, daß die vorgegebene Einspritzmenge auf einen Wert reduziert wird, durch den ausschließlich zumindest die minimal notwendige Abgaskatalysatortemperatur gewährleistet werden soll.

Ergänzend sei darauf hingewiesen, daß die erfindungsgemäße Abschaltsteuerung sowohl auf ein Einspritzventil als auch auf mehrere Einspritzventile, z. B. gemäß den in der DE 43 34 557 genannten Alternativen, angewendet werden kann.

Eine besonders hohe Kraftstoffverbrauchseinsparung wird erreicht, wenn eine exotherme Reaktion des Abgaskatalysators durch Beaufschlagung mit unverbranntem Luft-Kraftstoff-Gemisch hervorgerufen wird. Daher ist erfindungsgemäß weiterhin die vorgegebene Einspritzmenge höchstens so groß wie die maximal mögliche Einspritzmenge für ein gerade nicht zündwilliges Luft-Kraftstoff-Gemisch. Hierzu wird die vorgegebene Einspritzmenge vorzugsweise in Abhängigkeit von der momentan zugeführten Luftmasse bestimmt. Hierbei ist es auch möglich, jedes gewünschte Luftverhältnis (Lambda) einzustellen.

Nach einer vorteilhaften Weiterbildung der Erfindung ist die vorgegebene Einspritzmenge mindestens so groß wie die minimal notwendige Einspritzmenge für eine exotherme Reaktion des Gemisches im Abgaskatalysator.
Durch diese erfindungsgemäße Weiterbildung reicht die Vorgabe einer Einspritzmenge aus, mit der im Abgaskatalysator gerade noch eine Reaktion stattfinden kann, die zu einer Temperaturerhöhung führt. Hierzu können beispielsweise empirisch ermittelte Werte in Form von Tabellen in einem zur Brennkraftmaschinensteuerung ohnehin vorhandenen Steuergerät abgelegt werden. Hierdurch ist auf einfache Weise eine Minimierung des Kraftstoffverbrauches möglich.

In einer weiteren vorteilhaften Ausgestaltung der Erfindung ist die vorgegebene Abgaskatalysatortemperatur-Schwelle in etwa gleich der minimal notwendigen Abgaskatalysator-Reaktionstemperatur.
Sinkt also die Abgaskatalysatortemperatur unterhalb diese vorgegebene Schwelle, ist bei eingeschalteter Abschaltsteuerung nur eine kurze Einspritzung der vorgegebenen Einspritzmenge notwendig, um die Abgaskatalysatortemperatur wieder anzuheben. Hierdurch wird auch eine schnelle Regelung der Abgaskatalysatortemperatur erreicht.

Zusammenfassend wird festgestellt, daß bei eingeschalteter Abschaltsteuerung eines Einspritzventils erfindungsgemäß jedesmal, wenn die Abgaskatalysatortemperatur-Schwelle unterschritten ist, eine zumindest zeitweise einzuspritzende Einspritzmenge für ein genau definiertes, zur Erwärmung des Abgaskatalysators notwendiges Luft-Kraftstoff-Gemisch vorgegeben wird. Dieses Luft-Kraftstoff-Gemisch ist vorzugsweise so mager, daß es in der Brennkraftmaschine nicht gezündet werden kann. Jedoch muß die Abgaskatalysatortemperatur noch so hoch sein, daß dieses Gemisch im Abgaskatalysator exotherm reagiert. Liegt die Abgaskatalysatortemperatur wieder oberhalb der vorgegebenen Schwelle und ist die Abschaltsteuerung weiterhin eingeschaltet, ist die vorgegebene Einspritzmenge wieder zumindest nahezu null bzw. sind die Einspritzventile wieder total abgeschaltet.

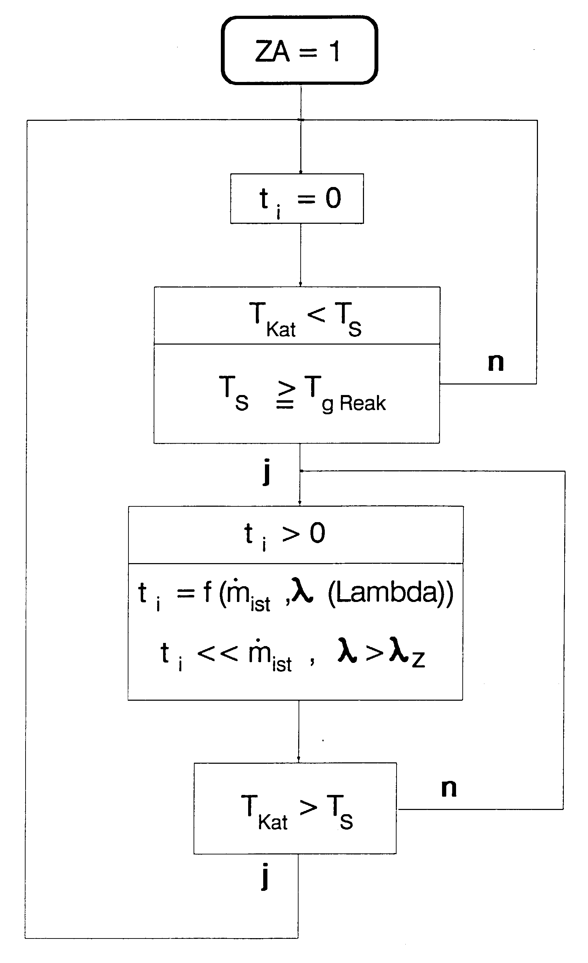

In der Zeichnung ist ein Ausführungsbeispiel der Erfindung dargestellt. Sie zeigt einen logischen Ablaufplan entsprechend der Erfindung im Falle einer eingeschalteten Abschaltsteuerung.

Der in der Zeichnung dargestellte logische Ablaufplan kann beispielsweise als Funktionsblock in Form eines Unterprogrammes "Zylinderabschaltung" (ZA) im elektronischen Steuergerät für eine Brennkraftmaschinensteuerung abgelegt sein. Dieses Unterprogramm wird aufgerufen, wenn bestimmte Bedingungen, z. B. Leerlaufbetrieb, vorliegen, durch die die Abschaltsteuerung der Einspritzventile bzw. die "Zylinderabschaltung" aktiviert werden soll (ZA = 1). Zunächst wird im folgenden eine totale Abschaltung der Einspritzventile vorgenommen, indem der Wert der vorgegebenen Einspritzmenge tᵢ auf Null gesetzt wird. Im nächsten Schritt wird die Abgaskatalysatortemperatur T_{Kat} erfaßt und mit der vorgegebenen Schwelle T_{S} verglichen. Hierbei ist die Abgaskatalysatortemperatur-Schwelle T_{S} größer oder gleich der Grenztemperatur T_{g Reak}, die mindestens vorliegen muß, damit der Abgaskatalysator noch reaktionsfähig ist. Liegt die Abgaskatalysatortemperatur T_{Kat} oberhalb der vorgegebenen Schwelle T_{S} wird eine totale Abschaltung der Einspritzventile beibehalten. Liegt jedoch die Abgaskatalysatortemperatur T_{Kat} unterhalb der vorgegebenen Schwelle T_{S} wird der Wert der vorgegebenen Einspritzmenge tᵢ größer als Null definiert. Diese von Null abweichende vorgegebene Einspritzmenge tᵢ wird vorzugsweise abhängig von der momentan zugeführten Luftmasse mᵢₛₜ und abhängig von einem gewünschten Luftverhältnis (Lambda) bestimmt. In jedem Fall ist der Wert der vorgegebenen Einspritzmenge tᵢ um ein Vielfaches niedriger als die momentan zugeführte Luftmasse mᵢₛₜ. Darüber hinaus wird die vorgegebene Einspritzmenge tᵢ derart gewählt, daß sich in Verbindung mit der momentan zugeführten Luftmasse mᵢₛₜ ein Luftverhältnis (Lambda) ergibt, das oberhalb eines Grenzwertes Lambda_{z} liegt, bei dem das Luft-Kraftstoff-Gemisch gerade nicht mehr zündwillig ist. Empirisch hat sich für diesen Grenzwert Lambda_{z} ein Wert von etwa 1,3 ergeben.

Im nächsten Schritt des logischen Ablaufplanes wird wieder die Abgaskatalysatortemperatur T_{Kat} mit der vorgegebenen Schwelle T_{S} verglichen. Ist die vorgegebene Schwelle T_{S} überschritten, wird zum Anfang des Unterprogramms zurückgekehrt und eine totale Abschaltung der Einspritzventile vorgenommen. Liegt jedoch die Abgaskatalysatortemperatur T_{Kat} noch unterhalb der vorgegebenen Schwelle T_{S}, wird weiterhin eine vorgegebene möglichst geringe Einspritzmenge tᵢ entsprechend vorgenannter Bestimmungsmöglichkeiten eingespritzt. Bezogen auf die Herstellung eines nicht brennbaren Gemisches wird demnach eine möglichst geringe Einspritzmenge vorgegeben, die jedoch so hoch sein muß, daß im Abgaskatalysator noch eine exotherme Reaktion stattfinden kann.

Mit diesem erfindungsgemäßen Ausführungsbeispiel ist eine Möglichkeit geschaffen, mit einer Abschaltsteuerung für Einspritzventile bei Brennkraftmaschinen auch bei niedrigen Abgaskatalysatortemperaturen den Kraftstoffverbrauch zu minimieren.

## Patentansprüche

1. Vorrichtung zur Abschaltsteuerung eines Einspritzventils bei Brennkraftmaschinen in Kraftfahrzeugen mit Mitteln zur Erfassung der Abgaskatalysatortemperatur, wobei Mittel zur Vorgabe einer zur Erhöhung der momentanen Abgaskatalysatortemperatur (T_{Kat}) notwendigen Einspritzmenge (tᵢ) vorhanden sind und wobei diese vorgegebene Einspritzmenge (tᵢ) während einer eingeschalteten Abschaltsteuerung (ZA=1) zumindest zeitweise in die grundsätzlich abgeschalteten Zylinder eingespritzt wird, wenn die Abgaskatalysatortemperatur (T_{Kat}) unterhalb einer vorgegebenen Schwelle (T_{S}) liegt, dadurch gekennzeichnet, daß die vorgegebene Einspritzmenge (tᵢ) höchstens so groß wie die maximal mögliche Einspritzmenge (tᵢ) für ein gerade nicht zündwilliges Luft-Kraftstoff-Gemisch ist.

2. Vorrichtung nach Patentanspruch 1, dadurch gekennzeichnet, daß die vorgegebene Einspritzmenge (tᵢ) mindestens so groß wie die minimal notwendige Einspritzmenge für eine exotherme Reaktion des Gemisches im Abgaskatalysator ist.

3. Vorrichtung nach Patentanspruch 1 oder 2, dadurch gekennzeichnet, daß die vorgegebene Abgaskazalysatortemperatur-Schwelle (T_{S}) in etwa die minimal notwendige Abgaskatalysator-Reaktionstemperatur (T_{g Reak}) ist.

## Claims

1. Apparatus for cut-off control of an injection valve in internal combustion engines in motor vehicles, comprising means for detecting the exhaust-gas catalyst temperature (T_{Kat}), wherein means are provided for presetting an amount (tᵢ) to be injected as required for increasing the instantaneous exhaust-gas catalyst temperature (T_{Kat}) and wherein, while the cut-off control is switched on (ZA=1) the preset amount (tᵢ) is injected at least temporarily into the cylinders which have been cut off in principle, if the exhaust-gas catalyst temperature (T_{Kat}) is below a preset threshold (T_{S}), **characterised in that** the preset amount injected (tᵢ) is not greater than the maximum amount (tᵢ) which can be injected just before the air-fuel mixture is ignitable.

2. Apparatus according to claim 1, **characterised in that** the preset amount (tᵢ) is at least as great as the minimum amount which has to be injected for an exothermic reaction of the mixture in the exhaust-gas catalyst.

3. Apparatus according to claim 1 or 2, **characterised in that** the preset exhaust-gas catalyst temperature threshold (T_{S}) is approximately the minimum necessary exhaust-gas catalyst reaction temperature (T_{g Reak}).

## Revendications

1. Dispositif de commande de coupure d'un injecteur d'un moteur à combustion interne équipant un véhicule automobile comprenant des moyens pour détecter la température du catalyseur des gaz d'échappement, des moyens pour prédéterminer une quantité nécessaire à injecter (tᵢ) pour augmenter momentanément la température du catalyseur des gaz d'échappement (T_{Kat}), cette quantité (tᵢ) prédéterminée étant injectée pendant une commande de coupure mise en oeuvre (ZA=1) au moins en partie dans les cylindres en principe coupés, si la température (T_{Kat}) du catalyseur des gaz d'échappement est inférieure à un seuil prédéterminé (T_{S}),
caractérisé en ce que
la quantité prédéterminée à injecter (tᵢ) est au maximum aussi élevée que la quantité maximale (tᵢ) qu'il est possible d'injecter pour un mélange air/carburant qui n'est pas précisément apte à s'enflammer.

2. Dispositif selon la revendication 1,
caractérisé en ce que
la quantité prédéterminée à injecter (tᵢ) est au moins égale à la quantité minimale nécessaire à l'injection pour une réaction exothermique du mélange dans le catalyseur des gaz d'échappement.

3. Dispositif selon la revendication 1 ou 2,
caractérisé en ce que
le seuil prédéterminé (T_{S}) de la température du catalyseur des gaz d'échappement est sensiblement la température de réaction minimale nécessaire du catalyseur des gaz d'échappement (T_{g Reak}).
